# EUROPÄISCHE PATENTANMELDUNG

(11) **EP 2 014 620 A2**
(43) Veröffentlichungstag der Anmeldung: **14.01.2009**
(21) Anmeldenummer: 08012445.6
(22) Anmeldetag: 10.07.2008
(51) Int. Cl.: C02F 1/46, C02F 1/461, C02F 1/48, C02F 103/08

(54) **Elektrolyseur mit Kondensatorelektroden in einer Magnetfeldpassage zum Entsalzen von Meerwasser**

(30) Priorität: 10.07.2007 DE 102007031977
(71) Anmelder: Imris, Pavel Dr., OT Hassleben 17268 Boitzenburger Land (DE)
(72) Erfinder: Imris, Pavel Dr., OT Hassleben 17268 Boitzenburger Land (DE)
(74) Vertreter: Riebling, Peter

(57) **Zusammenfassung**

Vorrichtung zum Entsalzen von Meerwasser, das in einen Elektrolyseur (5) eingeführt wird, in dem mit Wechselstrom bestromte Elektroden (15) versehen sind und daß der Elektrolyseur in einem asymmetrischen Luftspalt (7, 9) eines Elektromagneten angeordnet ist und daß der Elektromagnet mit einem frequenzgleichen Wechselstrom bestromt wird und damit die Salzkomponente des Meerwassers von der Trinkwasserkomponente getrennt wird dadurch gekennzeichnet, daß in einer Reihe von Elektromagneten (1, 2, 3, 4) eine Magnetfeldpassage mit radialem Magnetfeldgradient vorhanden ist und daß in der Magnetfeldpassage parallel mit imaginärer Achse (6) mindestens ein Elektrolyseur (5) befestigt ist, in dem mindestens zwei gegenüber positionierte Kondensatorelektroden (15) angeordnet sind, die am oszillierenden Stromgenerator (18) angeschlossen sind und daß die salzhaltige Lösung parallel mit der imaginären Achse (6) in Elektrolyseur (5) durch die Magnetfeldpassage fließt.

## Beschreibung

Die Erfindung betrifft einen Elektrolyseur mit Kondensatorelektroden im Magnetfeld zum Entsalzen von Meerwasser und zum Entsalzen von Salzlösungen gemäß Oberbegriff des Patentanspruches 1.

Für die Entsalzung von Meerwasser auf Trinkwasserqualität wird ein Elektrolyseur eingesetzt, in dem eine Mehrzahl von Kondensatorelektroden angeordnet sind und der in einem asymmetrischen Luftspalt einer Magnetfeldpassage befestigt ist. Die Kondensatorelektroden werden mit Hochfrequenzstrom bestromt und zwar so, daß jeweils zwei benachbarte Kondensatorelektroden parallel am Hochfrequenzgenerator angeschlossen sind. Jede Kondensatorelektrode ist im physikalischen Prinzip ein elektrischer Doppelkondensator, dessen Metallplatte aus ferromagnetischem Material besteht. Der Abstand zwischen den Kondensatorelektroden ist so gering, daß die elektrochemische Doppelschicht für die Trennung von Salzen maximal genutzt wird. Die Kinetik dieser Trennung findet in der elektrochemischen Doppelschicht und in den zwei Feldern statt.

In den Ozeanen steht eine große Menge von Salzwasser mit ca. 3,5 Gew-% Salz zur Verfügung, die bis auf 0,05 Gew-% für die wirtschaftliche Nutzung entsalzt werden muß. Das Meerwasser ist ein Elektrolyt und dessen 1-lauptelemente sind Natrium mit 10 mg/l, Magnesium mit 1.350 mg/l, Schwefel mit 885 mg/l, Kalium mit 380 mg/l, Kalzium mit 400 mg/l, Stronzium mit 8 mg/l, Eisen mit 0,01 mg/l, Carbon mit 28 mg/l, Bor mit 4,6 mg/l, Stickstoff mit 15 mg/l, Brom mit 65 mg/l, Barium mit 0,03 mg/l, Chlor mit 19 mg/l, Fluor mit 1,2 mg/l, Molybdän mit 0,01 mg/l sowie eine ganze Reihe von anderen Elementen, deren Konzentration unter einem hundertstel Milligramm pro Liter vertreten sind.

Gemäß dem Stand der Technik sind seit mehr als hundert Jahren unterschiedliche Verfahren und Vorrichtungen zum Entsalzen von Salzlösungen bekannt und manche davon werden an verschiedenen Orten als Anlage zum Meerwasserentsalzen betrieben.

Die Entsalzungstechnologie konzentriert sich hauptsächlich auf die Umkehrosmose, auf das Membranverfahren, auf das thermische Verfahren, auf die Multieffektdestillation u.a.. Die genannten Entsalzungsvorrichtungen sind robust, technisch aufwendig, teuer und bei allen ist der Energieverbrauch enorm. Zum Beispiel bei der Umkehrosmose liegt der Energieverbrauch zwischen 4 bis 5 kWh pro 1 qm Wasser. Die globale Entwicklung der Entsalzungskapazität steigt und der Bedarf an Trinkwasser steigt noch schneller. Die Entwicklung auf diesem Gebiet geht weiter und gemäß dem Stand der Technik sind weitere Verfahren und Vorrichtungen bekannt.

Vorrichtungen, die die Salzkomponente von der Trinkwasserkomponente mittels gleichzeitiger Einwirkung eines magnetischen und eines elektrischen Wechselfeldes trennen, sind bekannt. Die erste technisch nutzbare Vorrichtung, die in einem wechselnden Magnetfeld und simultan in einem wechselnden elektrischen Feld betrieben wird, ist in der WO 2006/039873A1 und im DE-GM 202004 015 611 Ui veröffentlicht. Ferner ist eine Vorrichtung zum elektromagnetischen Entsalzen von Meerwasser in dem DE-GM 20 2006 011 195 Ui beschrieben. Die genannten elektromagnetischen Verfahren haben viele wirtschaftliche Vorteile experimentell nachgewiesen und die Trennung von Salzen zwischen 35% bis 50% wurde erreicht. Das Defizit dieser genannten Vorrichtungen liegt in dem Bereich der elektrischen Stromdichte an den Elektroden und bipolaren Elektroden, die als Ncm2 definiert ist.

Gemäß dem Stand der Technik liegt die bereits erreichte Stromdichte zwischen 0,3 bis 0,5 Ncm2, was zu niedrig ist. Ferner ist der durch die Metallelektroden fließende kapazitive Strom zu niedrig und der Faradaysche Strom ist zu groß, was zur Bildung von Deckschichten auf den Metallelektroden führt. Es ist nur dann machbar, dieses Defizit zu beseitigen, wenn der kapazitive Strom gegenüber dem Faradayschen Strom erhöht wird und das bei wesentlich größerer Stromdichte an den Elektroden.

Meerwasser ist eine Elektrolytlösung und deshalb ist es in einem Elektrolyseur dieser Regel unterworfen. Bei fließendem Wechselstrom zwischen den Elektroden in dem Elektrolyseur steigt die Doppelschicht-Kapazität an den Elektroden bis 50 µF/cm2. Selbstverständlich ist dieser Wert von der Stromfrequenz abhängig. Gemäß dem Stand der Technik sind die zitierten elektromagnetischen Verfahren nicht imstande, die Doppelschicht-Kapazität völlig zu nutzen und deshalb kann man den Trennfaktor nicht verbessern. Gemäß dem Stand der Technik liegt der Wirkungsgrad bei Frequenzen zwischen 50 Hz und 400 Hz bei nicht mehr als 50%.

Der Erfindung liegt demgemäß die Aufgabe zugrunde, eine Vorrichtung zur Durchführung eines Verfahrens zum Entsalzen von Meerwasser zu schaffen, die mit einem wesentlich höheren Wirkungsgrad als bei den bisherigen oben genannten betreibbar ist und damit eine Trinkwasserbereitstellung zu wesentlich günstigeren Kosten ermöglicht wird und daß die Vorrichtung zur Durchführung des Entsalzungsverfahrens konstruktiv keinen großen Aufwand verlangt und günstig zu warten ist.

Die Vorrichtung zur Durchführung dieser Aufgabe besteht aus einem mit kapazitivem Strom bestrombaren und mit zueinander distanzierten Kondensatorelektroden bestücktem Elektrolyseur, der in einem asymmetrischen Luftspalt eines Elektromagneten bzw. Permanentmagneten angeordnet ist. In dem asymmetrischen Luftspalt ist das Magnetfeld nicht homogen und der Magnetfeldgradient steigt über die Breite der Elektrolyseurs. Die Kondensatorelektroden werden mit Hochfrequenzstrom betrieben und zwar so, daß eine Kondensatorelektrode an einem Pol eines Hochfrequenzgenerators angeschlossen ist und die zweite benachbarte ist an dem anderen Pol angeschlossen. Die dritte benachbarte Kondensatorelektrode ist an dem gleichen Pol angeschlossen wie die erste Kondensatorelektrode und die vierte Kondensatorelektrode ist an demselben Pol wie die zweite angeschlossen usw.. Nach der vorliegenden Erfindung ist für eine solche Vorrichtung wesentlich, daß die Kondensatorelektroden mit geringem Abstand zueinander in dem Elektrolyseur angeordnet sind und daß das Magnetfeld senkrecht zum elektrolytischen Strom wirkt. Das Meerwasser fließt parallel mit der Längsachse des Elektrolyseurs um die Kondensatorelektroden mäanderartig herum.

In dem zwischen den Kondensatorelektroden strömenden kapazitiven Strom sowie in dem senkrecht und parallel wirkenden Magnetfeld bekommen die Kationen und die Anionen einen verstärkten magnetischen Dipol, wodurch beide elektrisch geladenen Teilchen in Richtung des steigenden Magnetfeldgradienten gezogen werden. Die Kinetik der Trennung von Salzen von Trinkwasser ist direkt proportional zur Stromdichte an den Kondensatorelektroden und zum magnetischen Fluß im Luftspalt des Magneten. Bei steigender Intensität von beiden Feldern steigt der Wirkungsgrad exponential.

Die neue Vorrichtung zu seiner Durchführung wird nachfolgend anhand der zeichnerischen Darstellung von Ausführungsbeispielen näher erläutert.

Es zeigt schematisch

Fig. 1 in Draufsicht eine Mehrzahl von Elektromagneten in einer Reihe, in deren Luftspalt sich eine Magnetfeldpassage bildet, in der ein Elektrolyseur angeordnet ist.

Fig. 2 im Schnitt die Rückansicht eines Elektromagneten, in dessen asymmetrischen Luftspalt ein Elektrolyseur angeordnet ist.

Fig. 3 im Schnitt die Rückansicht eines zweiten Elektromagneten, in dessen in umgekehrte Richtung geschnittenen Luftspalt ein Elektrolyseur angeordnet ist.

Fig. 4 im Schnitt die Draufsicht eines Elektrolyseurs mit Kondensatorelektroden und elektrischem Schaltkreis.

Fig. 5 im Querschnitt eine Kondensatorelektrode mit Kondensatorplatte und Dielektrikum und zwei Entladungsplatten.

Fig. 6 die Seitenansicht einer Kondensatorelektrode mit Entladungsplatte und Isolator.

Fig. 7 im Querschnitt ein Elektromagnet mit Luftspalt, in dem ein Teil des Elektrolyseurs angeordnet ist.

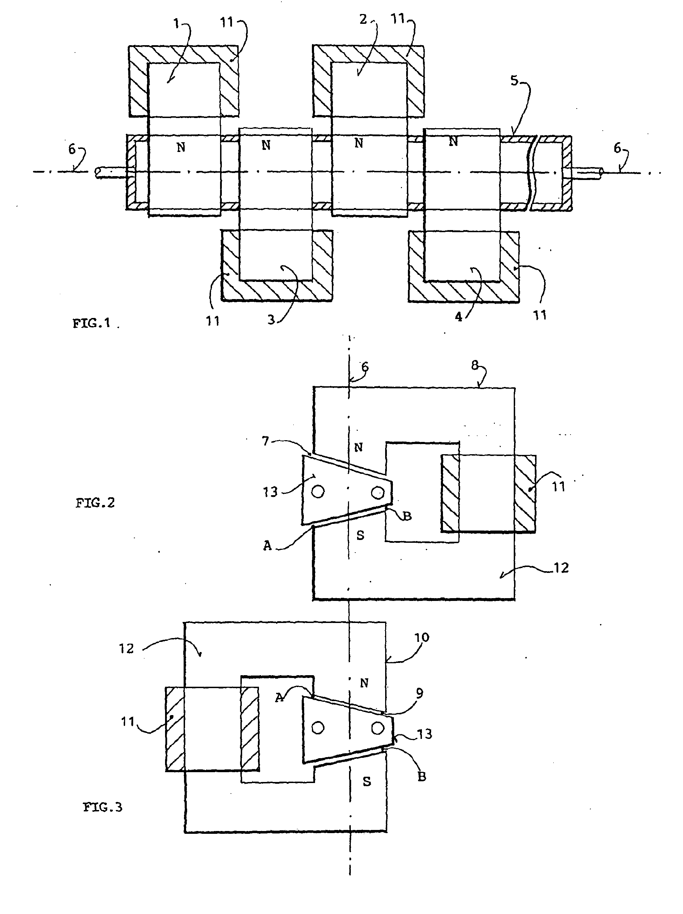

Das Grundprinzip der vorliegenden Vorrichtung ist in Fig. 1 veranschaulicht. Die Meerwasserentsalzung findet in einem Elektrolyseur statt, der in einer Magnetfeldpassage angeordnet ist. Die Magnetfeldpassage besteht aus einer Reihe von Elektromagneten 1, 2, 3, 4, deren asymmetrischer Luftspalt so geschnitten ist, daß ein asymmetrischer Elektrolyseur 5 parallel mit der imaginären Achse 6 hineingeschoben ist. Diese Konstruktion ist in Fig. 2 und Fig. 3 veranschaulicht. Der Luftspalt 7 am Elektromagnet 8 hat die kürzere Seite B an der inneren Seite des Elektromagneten 8. Die längere Seite A ist an der äußeren Seite des Elektromagneten 8. Fig. 3 veranschaulicht diese Konstruktionsparameter genau umgekehrt. Spalt 9 hat die kürzere Seite B an der Außenseite des Elektromagneten 10 und die längere Seite A ist an der inneren Seite des Elektromagneten.

Die imaginäre Achse 6 zwischen Elektromagnet 8 und 10 zeigt die Magnetfeldpassage zwischen diesen beiden. Das Beispiel in Fig 1 zeigt, daß die Vorrichtung aus vier Elektromagneten 1, 2, 3, 4 besteht, wobei Elektromagnete 1 und 2 an einer Seite des Elektrolyseurs 5 und Elektromagnete 3 und 4 an dessen andere Seite angeordnet sind. In praktischer Anwendung und nach Bedarf kann die Vorrichtung in Fig. 1 aus einer Mehrzahl von Elektromagneten bestehen. Die Magnetpole der Elektromagneten 1,2,3, 4 befinden sich eng beieinander und deshalb bildet die gesamte Magnetfeldpassage einen ausgeglichenen Magnetfeldtunnel. Eine derartige Anordnung ist technisch darum möglich, weil die Wicklungen 11 der benachbarten Elektromagnete an der anderen Seite des Elektrolyseurs angeordnet sind. Die Wicklungen 11 an den Elektromagneten 1, 2, 3, 4 sind aus Bandkondensator und mit oszillierendem Strom bestromt. Der Bandkondensator ist in der DE-OS 199 27 355 Al beschrieben. Das ist die erste Anwendungsalternative.

Bei der zweiten Anwendungsalternative sind die Spulen 11 aus Kupferdraht gewickelt und werden mit Gleichstrom bestromt. In dieser technischen Ausführung ist das Magnetfeld statisch.

Der Magnetkern 12 von allen Elektromagneten 1, 2, 3, 4 besteht aus einem weichen magnetischen Material, wie z.B. Transformatorblech oder einer speziellen Legierung, beispielsweise, aus 78%Nickel und 22% Eisen. Für den Bereich von mehreren Kilohertz des magnetisierenden Stroms ist hochpermeables Ferrit, wie Manifer, erforderlich. Für alle beiden Alternativen beträgt der Querschnitt des Magnetkerns 12 50 mm x 50 mm. Die Asymmetrie des Luftspaltes 7 und 9 ist an der Seite A 40 mm und an der Seite B 28 mm. Die Intensität des durch Wicklungen II fließenden Magnetisierungsstromes ist regulierbar und nach Bedarf einstellbar.

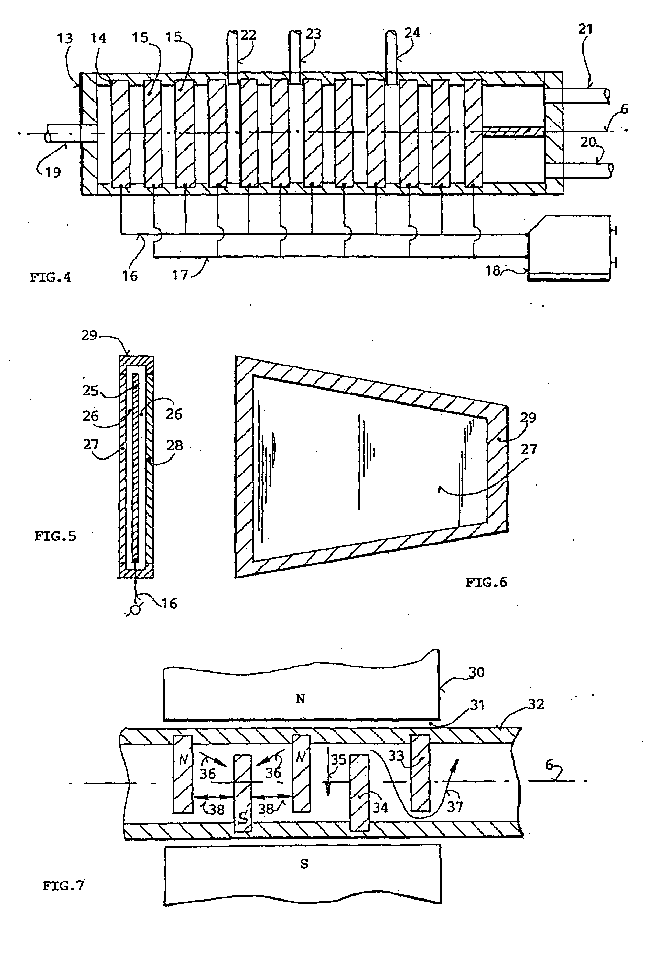

In dem asymmetrischen Luftspalt 7, 9 in Fig. 2 und Fig. 3 sowie in der gesamten Magnetfeldpassage ist ein Elektrolyseur 13 aus elektrisch nichtleitendem Material plaziert. In Fig. 4 ist der Elektrolyseur 13 in Draufsicht veranschaulicht. An den Seiten- wänden sind Nuten 14 vorhanden, in denen eine Mehrzahl von Kondensatorelektroden 15 hineingepreßt ist. Durch die elektrischen Anschlüsse 16, 17 sind die Kondensatorelektroden 15 parallel an Hochfrequenzgenerator 18 angeschlossen. Durch Zufluß 19 fließt Meerwasser in den Elektrolyseur 13. Durch Abfluß 20 fließt Trinkwasser heraus und Abfluß 21 ist der Abfluß für das Salzkonzentrat. Abflüsse 22, 23, 24 sind an einer Seite des Elektrolyseurs 13 angeordnet und deren Funktion ist, das Salzkonzentrat an der Seite zu verringern und dadurch den Konzentrationsgradient an Ort und Stelle niedrig zu halten. Das Meerwasser fließt durch den Elektrolyseur 13 mit einer bestimmten Geschwindigkeit in 1/min., die so bestimmt wird, daß zusammen mit anderen physikalischen Parametern der beste Wirkungsgrad erreicht wird. Die Kondensatorelektroden 15 in Fig. 4 sind dicht beieinander und deren Abstand beträgt zwischen 2 mm und 5 mm.

In dem planaren elektrischen Feld zwischen den Elektroden 15 befindet sich die berühmte chemische Doppelschicht, die nach dem mathematischen Modell von Gouy, Chapman und Stern mit zunehmendem Abstand zwischen den Elektroden in eine diffuse Doppelschicht zerfällt. Aus diesem Grund sollen die Kondensatorelektroden 15 mit minimalem Abstand voneinander angeordent sein, wodurch der kapazitive elektrische Strom zwischen den Elektroden hochgehalten wird.

In Fig. 5 ist die Kondensatorelektrode im Querschnitt veranschaulicht. In der Mitte befindet sich Kondensatorplatte 25, die mit Dielektrikum 26 umhüllt ist. Kondensatorplatte 25 ist mittels dem elektrischen Anschluß 16 an Hochfrequenzgenerator 18 angeschlossen. An der ersten Außenseite des Dielektrikums 26 ist eine metallische Plattenelektrode 27 angeordnet. An der anderen Seite des Dielektrikums 26 ist eine ähnliche metallische Plattenelektrode 28 angebracht. Die gesamten Bauteile 25, 26, 27, 28 sind mit elektrischem Isolator 29 isoliert. So hergestellte Kondensatorelektroden stellen im physikalischen Prinzip einen Doppelkondensator dar, der im Elektrolyseur 13 eine besondere technische Funktion erfüllt.

Fig. 6 veranschaulicht in Seitenansicht den in Fig. 5 definierten Querschnitt und zeigt die Plattenelektroden 27 und den elektrischen Isolator 29. Die Kondensatorelektrode in Fig. 6 ist konisch geformt und an das Profil des Elektrolyseurs 13 angepaßt. Aus physikalischer Sicht ist es wichtig, daß die Kondensatorplatte 25 aus weichem magnetischem Material besteht. Ferner hat Dielektrikum 26 eine besondere technische Bedeutung und besteht aus hochwertigem Material, wie z.B. Perovskite, dessen allgemeine chemische Formel lautet: Ba(Til-xZr x)03 oder aus Bleimagnesiumniobat mit der Formel Pb(M9113 Nb2/3)03. Diese Verbindungen zeigen an der Curietemperatur keinen scharfen Phasenübergang und deren Dielektrizitätskonstante liegt zwischen 10.000 und 50.000.

Fig. 7 zeigt im Querschnitt ein Elektromagnet 30 zwischen dessen Pole N, S in Luftspalt 31 ein Teil von Elektrolyseur 32 angeordnet ist. Im Elektrolyseur 32 sind gemäß Fig. 4 und Fig. 9 Kondensatorelektroden 33, 34 plaziert, deren zusätzliche physikalische Funktion es ist, den senkrecht wirkenden magnetischen Fluß 35 zum Teil in horizontale Richtung 36 abzuleiten. Technisch ist dies deshalb möglich, weil die Kondensatorplatte 25 in Fig. 5 aus weichem magnetischem Material besteht. Ein solch schwacher horizontaler magnetischer Fluß 36, der parallel zum elektrischen Feld 38 verläuft, hat wirtschaftliche Bedeutung. Gemäß der vorliegenden Vorrichtung ist der horizontale magnetische Fluß 36 ein physikalischer Parameter mit der Funktion, das magnetische Dipolmoment für alle geladenen Teilchen in dem Elektrolyt zu vergrößern. Die elektrisch geladenen Teilchen in dem horizontalen Magnetfeld 36 und in dem horizontalen Feld 38 sind nach bekanntem physikalischem Gesetz gezwungen, sich um die Magnetfeldlinien spiralförmig zu bewegen. Ferner zeigt Pfeil 37 in Fig. 7 die Flußrichtung des Elektrolyts, der um die Kondensatorelektroden 33, 34 mäanderartig fließt, was Pfeil 37 veranschaulicht. Die Kondensatorelektroden 33 sind an der oberen Wand und die Kondensatorelektroden 34 an der unteren Wand des Elektrolyseurs 32 befestigt. In dieser Anordnung fließt das Meerwasser, wie Pfeil 37 veranschaulicht, durch die Lücken zwischen den Elektroden und der Eletkrolyseurwand.

Die wesentlichen variablen physikalischen und technischen Komponenten, aus denen die vorliegende Vorrichtung zur Entsalzung von Meerwasser besteht, sind im obigen Text sowie in den sieben zeichnerischen Darstellungen ausführlich beschrieben. Von Wichtigkeit ist die Kinetik, welche die Trennung der Salzkomponente vom Trinkwasser regelt. Die Kinetik, die diese Trennung regelt, ist der magnetischen Feldstärke in der Magnetfeldpassage, ferner der Länge der Magnetfeldpassage sowie der Kapazität der Kondensatorelektroden und der Frequenz des Stromes direkt proportional. Allerdings gilt diese Regel nur dann, wenn das senkrecht wirkende Magnetfeld einen starken Magnetfeldgradient in dem asymmetrischen Luftspalt aufweist. Durch diesen asymmetrischen Luftspalt und in der gesamten Magnetfeldpassage steigt der Magnetfeldgradient von Seite A zur Seite B. Gerade in diesem Magnetfeldgradient werden die elektrisch geladenen Teilchen nach dem Prinzip eines magnetischen Dipolmoments in Richtung des steigenden Magnetfeldgradienten gezogen. Das Dipolmoment richtet sich nach der spezifischen elektrischen Ladung eines jeden geladenen Teilchens. Teilchen mit größerer spezifischer elektischer Ladung werden mit größerer Kraft in Richtung des steigenden Magnetfeldgradienten gezogen als Teilchen mit niedriger spezifischer Ladung. Das ist die Regel, die diese selektive Trennung bestimmt.

Physikalisch ist wichtig, daß die Teilchen in dem Elektrolyt durch eine große elektrische Stromdichte und durch eine große Stromfrequenz in oszillierende Bewegung versetzt werden.

Solche Bewegung findet in dem engen Raum zwischen den Kondensatorelektroden statt, d.h., in der Nähe der chemischen Doppelschicht.

Gemäß der vorliegenden Vorrichtung ist es technisch machbar, daß die Stromdichte an der Plattenelektrode 27 in Fla. 6 bis 8 Ncm2 einstellbar ist. Das ist ein Zehnfaches dessen, was im Stand der Technik erreichbar ist. Wenn durch den Elektrolyseur mit sehr hoher Frequenz elektrischer Strom fließt, dann ist nach dem Debye-Falkenhagen-Effekt eine noch größere Stromdichte erreichbar. Mit steigender Stromdichte steigt der Unterschied in spezifischer Ladung von jedem Teilchen, wodurch die selektive Trennung von den Salzteilchen immer größer wird. Diese Regel hat breite Gültigkeit und eine physikalische Begrenzung ist nicht bekannt. Ein mathematisches Modell, um diese Regel zu definieren, ist kompliziert und liegt außerhalb des hier beschriebenen Textes.

Die vorliegende Vorrichtung ist technisch unkompliziert, leicht herstellbar und die gesamte Konstruktion besteht aus kommerziellen Werkstoffen. Betrieben wird die Vorrichtung durch verschiedene physikalische Parameter, die für konkrete Salzlösungen konkret einstellbar sind. Beispielsweise wird die Vorrichtung mit unterschiedlichen Stromfrequenzen betrieben und zwar, zwischen 50 Hz und 300 kHz. Wenn die Vorrichtung bis 10 kHz betrieben wird, dann bestehen die Magnetkerne aller Elektromagneten aus einer Nickel-Eisen-Cobalt-Legierung und die Dicke der Bleche beträgt zwischen 1 mm und 2 mm. In dieser technischen Ausführung fließt durch den Elektrolyseur Strom mit derselben Frequenz wie der Magnetisierungsstrom, der in den Bandkondensatorwicklungen 11 oszilliert.

In Fig. 1 ist eine fundamentale Einheit veranschaulicht, die aus vier Elektromagneten 1, 2, 3, 4 besteht. Die Frequenzen für beide elektrischen Ströme sind zwischen 1 kHz und 7 kHz einstellbar und die Stromdichte an den Elektrodenplatten 27 beträgt 5 Ncm2. Eine solche Einheit ist technisch imstande, das Meerwasser bis auf 0,05 Gew-% zu entsalzen. Wirtschaftlich ist von Wichtigkeit, der elektrische Energieverbrauch einer solchen Einheit liegt unter 2 kWh/1 .000 1 Wasser.

Die Einheit in Fig. 1 kann man mit weiteren Elektromagneten verlängern. Wenn die optimale Trennung des Salzkonzentrats erreicht ist, dann ist die Anzahl der Elektromagnete ausreichend. Der Trennfaktor im Elektrolyseur 13 in Fig. 4 wird durch den Konzentrationsgradienten negativ beeinflußt. Weil die Salztrennung bereits bei der ersten Kondensatorelektrode stattfindet und sich bei jeder zusätzlichen Kondensatorelektrode 15 vergrößert, ist es notwendig, daß die Abflüsse 22, 23, 24 in Fig. 4 an der Seite des Elektrolyseurs 13 angeordnet sind. Durch die genannten Abflüsse wird das Salzkonzentrat kontinuierlich reduziert.

Die vorliegende Vorrichtung wird ferner in speziellen Gebieten der Wirtschaft eingesetzt und mit einer Stromfrequenz von mehr als 100 kHz betrieben. Wenn durch den Elektrolyseur 13 in Fig. 4 elektrischer Strom mit einer solchen Frequenz fließt, dann ist das Produkt aus Strom und Fläche ein magnetisches Dipolmoment, dessen vektorielle Richtung schnell wechselt. In einem so entstehenden elektrochemischen Umfeld werden die geladenen Teilchen immer in die Richtung des steigenden Magnetfeldgradienten gezogen und das unabhängig davon, ob das äußere Magnetfeld oszilliert oder statisch ist. Gemäß dieser Regel werden die Elektromagnete 1, 2, 3, 4 mit Gleichstrom magnetisiert und die Wicklungen 11 werden dann aus Kupferdraht gewickelt. Technisch bedeutet dies, daß in der gesamten Magnetfeldpassage ein statisches Magnetfeld die Trennung von geladenen Teilchen bewirkt. In einer solchen statischen Magnetfeldpassage ist der Trennfaktor enorm groß und der Trennwirkungsgrad ist sehr wirtschaftlich.

Die vorliegende Vorrichtung findet eine breite Anwendung in der Wirtschaft und ist in den folgenden Fachgebieten einsetzbar:
- in der Metallurgie
- in der chemischen Industrie
- in der Pharmaindustrie
- in der nuklearen Industrie

Die hier beschriebene Vorrichtung besteht aus einer Einheit mit einer Trinkwasserkapazität von ca. 1.000 1/Std.. Die Länge der Einheit wird nach Bedarf gewählt. Große Trinkwasseranlagen werden aus einer Mehrzahl von solchen Einheiten zusammengebaut und an geeigneten Orten betrieben. Die Betriebskosten liegen im Vergleich zum Stand der Technik nur bei 20% und deshalb ist die hier beschriebene Vorrichtung wirtschaftlich vorteilhaft.

## Patentansprüche

1. Vorrichtung zum Entsalzen von Meerwasser, das in einen Elektrolyseur (5) eingeführt wird, in dem mit Wechselstrom bestromte Elektroden (15) versehen sind und daß der Elektrolyseur in einem asymmetrischen Luftspalt (7, 9) eines Elektromagneten angeordnet ist und daß der Elektromagnet mit einem frequenzgleichen Wechselstrom bestromt wird und damit die Salzkomponente des Meerwassers von der Trinkwasserkomponente getrennt wird **dadurch gekennzeichnet, daß** in einer Reihe von Elektromagneten (1,2, 3, 4) eine Magnetfeldpassage mit radialem Magnetfeldgradient vorhanden ist und daß in der Magnetfeldpassage parallel mit imaginärer Achse (6) mindestens ein Elektrolyseur (5) befestigt ist, in dem mindestens zwei gegenüber positionierte Kondensatorelektroden (15) angeordnet sind, die am oszillierenden Stromgenerator (18) angeschlossen sind und daß die salzhaltige Lösung parallel mit der imaginären Achse (6) in Elektrolyseur (5) durch die Magnetfeldpassage fließt.

2. Vorrichtung nach Anspruch 1, **dadurch gekennzeichnet, daß** die Kondensatorelektrode (15) aus ferromagnetischer und elektrisch leitender Platte (25) besteht, die mit Dielektrikum (26) beschichtet ist und an beiden Außenseiten des Dielektrikums (26) Plattenelektrode (27, 28) aus elektrisch leitendem Material angeordnet ist und daß die Teile (25, 26, 27, 28) an deren Rand mit elektrischem Isolator (29) isoliert sind.

3. Vorrichtung nach Anspruch 1, **dadurch gekennzeichnet, daß** die Magnetfeldpassage mindestens aus zwei beieinander positionierten Elektromagneten (8, 10) besteht, in deren Magnetkerne (12) asymmetrische Luftspalte (7, 9) so gerichtet sind, daß die beiden kürzeren Seiten (B) an einer Seite des Elektrolyseurs (13) und die beiden längeren Seiten (A) an der gegenüberliegenden Seite des Elektrolyseurs (13) angeordnet sind.

4. Vorrichtung nach Anspruch 1, **dadurch gekennzeichnet, daß** die Trinkwasserkomponente vom Salzwasserkonzentrat im statischen Magnetfeld des Magneten (8, 10) und gleichzeitig im oszillierenden Strom, der zwischen Kondensatorelektroden (15) strömt, getrennt wird.

5. Vorrichtung nach Anspruch 1, **dadurch gekennzeichnet, daß** die Trinkwasserkomponente vom Salzkonzentrat in dem zwischen Kondensatorelektroden (33, 34) horizontal wirkenden Magnetfeld (36) getrennt wird.
